# EUROPEAN PATENT SPECIFICATION

(11) **EP 4 132 978 B1**
(45) Date of publication and mention of the grant of the patent: **18.12.2024**
(21) Application number: 21718161.9
(22) Date of filing: 26.03.2021
(51) Int. Cl.: C08B 15/06, B01J 8/00

(54) **PROCESS FOR PRODUCING CELLULOSE CARBAMATE**
PROZESS ZUR HERSTELLUNG VON CELLULOSECARBAMAT
PROCEDE DE PRODUCTION DE CARBAMATE DE CELLULOSE

(30) Priority: 06.04.2020 FI 20205365
(43) Date of publication of application: 15.02.2023
(73) Proprietor: Andritz Oy, 00180 Helsinki (FI)
(72) Inventor: VANHATALO, Kari, 48601 Kotka (FI); PESONEN, Elina, 48601 Kotka (FI); RÅMARK, Hannu, 48601 Kotka (FI); PELKONEN, Jukka-Pekka, 00076 Aalto (FI)
(86) International application number: PCT/FI2021/050210
(87) International publication number: WO 2021/205060

(56) References cited:
- WO-A1-2015/198218
- JP-A- 2011 214 805

## Description

### Field of the invention

The present invention relates to a process for producing cellulose carbamate (CCA) which can be further processed into regenerated cellulose products such as fibers, films, or sponges, etc. More specifically, the present invention relates to a process based on the fluidized bed principle for producing CCA from cellulosic materials.

### Background of the invention

Cellulose carbamate (CCA) is an alkali-soluble cellulose derivative. Due to its alkali solubility properties, CCA is a good raw material for regenerated cellulose products.

CCA is manufactured by reacting cellulose with urea or urea radical at elevated temperatures. Typically, urea is used, and it reacts with cellulose according to reaction equations (1) and (2). In the carbamation reaction, urea starts to decompose when the temperature exceeds 133°C, and the intermediate products isocyanic acid and ammonia are formed (reaction equation 1). Isocyanic acid reacts further with OH-groups of cellulose by forming a carbamate group to the cellulose backbone (2).

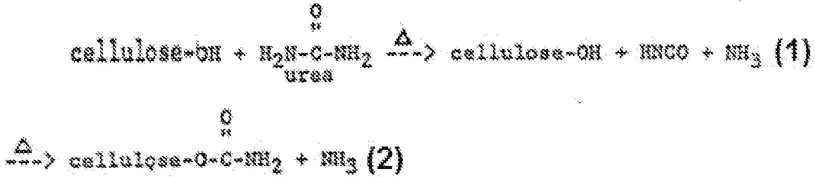

Ammonia gas, which is formed during cellulose carbamation, needs to be removed to prevent saturation of the product side of the reaction equation and to prevent the stopping of carbamation.

Due to elevated temperature water is evaporated and the CCA thus formed is physically in solid form. It is a stable material which can be stored and transported. These properties make CCA an industrially viable product.

Several processes are known to manufacture CCA. US 2,134,825 discloses a process in which cellulose and urea are reacted at an elevated temperature to form an alkali-soluble product in a hot blast oven. In known processes alkaline auxiliary agents are used in the carbamation reaction. US4404369 (FI 62318) discloses a method where an ammonia solution having urea dissolved therein is utilized and cellulose and urea are reacted at elevated temperatures to form an alkali-soluble product in a vacuum oven. WO02/060956 discloses a method where cellulose carbamate is made in organic inert medium from cellulose and urea in a continuous stirring reactor. WO03099872 discloses a process where cellulose is first activated with a mixture of urea and alkali, after which liquid is pressed and the carbamation reaction is done at elevated temperatures by utilizing a reactive extrusion equipment to form an alkali-soluble product. WO2003064476 discloses a CCA production method where the carbamation reaction is done in an oven by using alkalizing agent, such as sodium hydroxide. WO2015/198218 presents a process where the cellulose carbamation reaction between cellulose and urea is made in an oven/reactor equipped with a mixer at elevated temperatures by using alkalizing agent. WO2019120529 discloses a process where cellulose is carbamated by utilizing a kneader apparatus and alkalizing agent.

### Summary of the invention

In view of the known technology there is a need to provide a process, in which the need of devices and chemicals is further decreased.

In known processes the production of CCA is carried out in a simple oven / mixing reactor or by using several types of equipment. In addition the carbamation reaction is enhanced by using alkaline or oxidative agent. It has not been presented an efficient process on how CCA is made in a single device without using any auxiliary agent, such as an alkalizing agent.

It has now surprisingly been found that by using a fluidized bed dryer, possibly divided into two temperature sections, in the CCA production as a reactor, the carbamation reaction efficiency is high and some of the process stages can be combined and carried out in a single device. Thus, the overall process concept is simple because of a low number of process devices. This enables an energy-efficient production of CCA in industrial scale.

The fluidized bed dryer works on a principle of fluidization of solid materials. In the fluidization process hot and dry air or another gaseous drying medium is led through a bed of solid particle material. This gaseous flow moves upwards through the solid particle material bed. As the velocity of the gaseous flow increases, upward drag forces on the solid particles increase and, at a certain point, they become equal to the gravitational forces. At this point the particles start to float and are suspended in the air and a fluidized bed of solid material is generated. The gaseous stream coming out from the fluidized bed dryer goes through a cyclone which separates a gaseous fraction and a possible small solid fraction which is typically fed back to the dryer. It is possible to divide a drying chamber of the fluidized bed dryer into two sections to enable usage of two different temperature zones. The sectioning may be made by using a partition, typically an adjustable overflow plate. This kind of sectioning set-up is needed when residual moisture is wanted to evaporate at first and after that the carbamation reaction is done at a different temperature. This arrangement enables also to separate different kinds of gases very efficiently.

Carbamation reaction efficiency means a ratio of the nitrogen amount bonded to cellulose carbamate (Reaction equation 2) in a cellulose chain to the nitrogen amount of isocyanate which is formed in carbamation reaction due to decomposition of urea (Reaction equation 1).

The following example illustrates the concept of reaction efficiency in connection with this invention:
Cellulose amount in carbamation was 100 g and urea dosage 10 %, meaning 10 g of urea. The molar mass of urea is 60.06 g/mol. Reaction equation 1 shows that 1 mol of urea produces 1 mol of isocyanate meaning 1 mol of nitrogen in isocyanate. Nitrogen in isocyanate can form a carbamate group to a cellulose chain. The molar mass of nitrogen is 14.01 g/mol. Theoretically this means 10 g / 60.06 g/mol x 14.01 g/mol = 2.33 g of nitrogen in formed CCA. 2.33 g / (100 g + 2.33 g) x 100 ~ 2.33 % nitrogen content in CCA. Analysis shows that the nitrogen content of CCA is 1.00 %. Thus, the reaction efficiency is 1.00 % / 2.33 % x 100 = 42.92 % when the theoretical value is naturally 100.00 %.

### Description of invention

The new process for producing cellulose carbamate (CCA) comprises the steps of:
a) providing a mixture including cellulose, liquid and urea, and
b) subjecting the mixture to drying and heating to carry out the carbamation reaction between cellulose and urea to produce cellulose carbamate and released ammonia in a fluidized bed, wherein the mixture is introduced into a fluidized bed drying chamber; a stream of hot gaseous medium is introduced into the chamber to effect fluidization of the mixture in order to dry and heat the mixture, and a stream of gaseous medium containing ammonia and the produced cellulose carbamate are removed from the fluidized bed drying chamber.

A mixture of cellulosic material and urea enters a chamber of the fluidized bed dryer. The form of the mixture has to be such that the fluidized bed dryer works normally. In practice this means that the mixture has to be in a form of particles, pellets, powder, fibers, flocs, pieces, or in such form that the mixture can start to fluidize inside the dryer. If the residual moisture content of material is too high and the material is fed to the dryer in a form of solution, paste or slurry a gaseous drying stream cannot fluidize the mixture.

CCA can be manufactured from all types of cellulosic materials, such as from typical chemical pulps: kraft pulp, pre-hydrolysis kraft pulp, soda-AQ pulp, sulfite pulp, neutral sulfite pulp, acid sulfite pulp or organosolv pulp. CCA may be manufactured also from cellulosic waste materials such as cardboards, textile wastes, recycled papers, or any cellulosic waste materials having a suitable purity.

The liquid in the mixture is inert, preferably water.

The process that produces CCA from cellulosic material can be carried out at a stand-alone plant or at a plant integrated to a chemical pulp mill.

According to the new method the fluidized bed dryer can work at one or two temperatures:
- Dryer working at one temperature which is 133°C or over, typically 133-200 °C.
- Dryer having two working temperatures is divided into sections e.g. by using an adjustable overflow plate:
   ∘ Low temperature (LT) section working at a temperature below 133°C, typically over 60 °C and below 133 °C;
   ∘ High temperature (HT) section working at a temperature of 133°C or over, typically 133-200°C.

In the case when the fluidized bed dryer works at one temperature, gaseous streams (moist air and ammonia-rich gaseous stream) can be taken out from the drying chamber via one outlet, or separately but there may be mixing of the streams. If there is a need to separate moist air and ammonia-rich gaseous stream very efficiently, the drying chamber is divided into two sections by using an adjustable overflow plate.

When the mixture enters the fluidized bed dryer, residual moisture is evaporated. This means that a hot moist gaseous stream is formed. The moist stream is led out from the dryer through a cyclone which separates gaseous and solid fractions. The hot moist stream is led to further use. The solid fraction is returned to the fluidized bed dryer. When residual moisture is evaporated, the temperature of the solid part of the mixture starts to rise. When the urea decomposition temperature is exceeded (133°C), ammonia is formed. Under the circumstances at high temperature, ammonia is in gaseous form and it is led out from the dryer to prevent undesirable side reactions between ammonia vs urea or ammonia vs isocyanate. Ammonia-rich gas stream goes through the cyclone which separates a small solid fraction and returns it to the dryer. The ammonia-rich gaseous stream is led to further usage mentioned below. Due to the working principle of the fluidized bed dryer, the gaseous drying stream that flows through the solid cellulosic material in the fluidized bed, removes formed ammonia away very efficiently. It is possible to attain high reaction efficiencies of over 80% by using the fluidized bed dryer as a carbamation reactor in the CCA manufacturing process. There is no need to use auxiliary agents, such as alkaline or oxidative agents, e.g. sodium hydroxide or peroxide, to enhance the reaction efficiency. It is also possible to combine the residual moisture evaporation stage and the carbamation stage to take place in the same process vessel to minimize the number of process machines.

In the case when the fluidized bed dryer works at one temperature (>133°C), water evaporation and carbamation happen in the same drying chamber and device. The residence time in the drying chamber is 5 - 240 minutes, preferably 30 - 180 minutes and more preferably 60 - 120 minutes.

In the case when the fluidized bed dryer is working at two temperatures, the drying chamber is divided into two sections, typically by using an adjustable overflow plate; LT section working at a temperature below 133°C and HT section working at a temperature of 133°C or over. The mixture enters first the LT section. In the LT section residual moisture existing in the mixture is evaporated, and the temperature does not exceed the urea decomposition temperature. Moist air is led through the cyclone which separates gaseous and solid fractions. The solid fraction is returned to the fluidized bed dryer. The residence time in the LT section depends on the moisture amount of the mixture and the temperature of the drying air, but it is typically 10 - 90 minutes, preferably 20 - 70 minutes.

After the LT section, the mixture enters the HT section. There the temperature level is higher than in the LT section. The HT section works at a temperature of 133°C or over. In the HT section the temperature is so high, that urea starts to decompose and CCA is produced. At the same time ammonia is formed. Due to high temperature the ammonia is in gaseous form. To avoid unfavorable reactions between ammonia vs urea, or ammonia vs formed isocyanic acid (Reaction equivation1), this gaseous component needs to be removed to ensure a high reaction efficiency during cellulosic material carbamation. The gaseous drying stream that flows through the solid cellulosic material removes formed ammonia from the drying chamber very efficiently. It is possible to attain high reaction efficiencies of over 80% by using the fluidized bed dryer as a carbamation reactor in the CCA manufacturing process. The ammonia-rich gas stream is led through the cyclone which separates a small solid fraction and returns it to the drying chamber. There is no need to use auxiliary agents, such as sodium hydroxide. It is also possible to connect the residual moisture evaporation stage to the same device having two sections to minimize the number of process machines. The residence time in the HT section is 5 - 150 minutes, preferably 10- 120 minutes, more preferably 20 - 100 minutes.

CCA produced in the fluidizing bed dryer goes to packing, or it can be further used immediately after the dryer to produce regenerated cellulose products.

Optionally, if the product needs washing after the dryer, it enters a washing stage having one or several washers. The washer may be of any apparatus type suitable for CCA, e.g. a drum washer, a centrifuge, a disc filter, a drum filter, a filter press, a belt press, a twin wire press, a screw press, a wash press, or a belt washer. The next step in the process may be drying, if the CCA needs to be dried to a high dry content before further processing, transportation or use. The dryer type can be: a paddle dryer, a flash dryer, a fluidized bed dryer, a belt dryer, a drum dryer, a helix dryer, a plate dryer, or a spray dryer. Finally, CCA is packed or further used.

In the case the new process is a stand-alone process, a separate process utility system is needed to produce electricity, heat, and steam to the process.

The new process can be integrated to a chemical pulp mill, where all process utility systems exist and which can produce electricity, heat and steam to processing machines. The integration to the chemical pulp mill makes also possible to treat waste streams produced by the carbamation process:
- In the fluidized bed dryer the cellulose carbamation reaction happens and NH₃ is formed (Reaction equation1). Due to the working principle of the dryer NH₃ is efficiently removed along with the flow of the gaseous drying medium stream. When this stream is led out from the dryer it passes a cyclone which separates a gaseous phase and a small solid fraction which is fed back to the dryer. The ammonia containing gaseous stream can be processed, as presented in WO/2019/224429,e.g.:
   ∘ feeding it to a system where ammonia reacts with CO₂ and urea is produced to be used again in carbamation reaction
   ∘ feeding it to a scrubber where it reacts with H₂SO₄ to produce ammonium sulfate fertilizer
   ∘ feeding it to a chemical pulp mill flue-gas system to minimize NOx emissions.
- If CCA is washed, nitrogen containing washing filtrates can be processed as presented in WO/2019/224429, e.g.:
   ∘ leading filtrates to a chemical pulp mill wastewater treatment plant, where they act as a nutrient source for micro-organisms
   ∘ leading filtrates to an evaporation plant and producing nitrogen containing concentrated fertilizer solutions or dry fertilizers.

### Examples.

Mixtures of cellulose and urea were fed to the fluidized bed dryer and different carbamation temperatures and times were used. In all test points a urea amount was 11.5% calculated on oven dry cellulose amount.

The fluidized bed dryer worked in two sections. LT section worked at 110°C and the residence time was 60 minutes in all test points. HT section worked at 145°C, 160°C and at 175°C in different test points. Product samples were taken during carbamation at different times. The total nitrogen content was analysed from the samples by using Leco TruSpec Micro CHNS analyzer. Before the analysis the samples were washed well with hot 60-80 °C water (120 g_{Wash H2O} / g_{CCA}) to ensure that only nitrogen covalently bonded to cellulose exists (meaning nitrogen in carbamate group). So the amount of nitrogen in the samples describes how well urea, when it is decomposed to isocyanic acid, reacts with cellulose forming carbamate groups to a cellulose chain. The theoretical maximum nitrogen amount in CCA with urea dosage of 11.5% is 2.48%.

Table 1. shows the results of the experiments at different carbamation temperatures and at different carbamation times.

**Table 1. Cellulose carbamation results in the fluidized bed dryer tests.**

| | | | | | | | |
|---|---|---|---|---|---|---|---|
| 145°C | Time | (min) | 0 | 17 | 47 | | 167 |
| | Nitrogen content | (%) | 0.0 | 1.4 | 2.0 | | 2.1 |
| | Carbamation efficiency | (%) | 0.0 | 57.6 | 80.7 | | 86.7 |
| 160°C | Time | (min) | | 10 | 40 | 100 | 160 |
| | Nitrogen content | (%) | 0.0 | 1.3 | 2.2 | 2.1 | 2.2 |
| | Carbamation efficiency | (%) | 0.0 | 54.3 | 90.5 | 84.0 | 90.0 |
| 175°C | Time | (min) | | 50 | 70 | 110 | 170 |
| | Nitrogen content | (%) | 0.0 | 2.2 | 1.6 | 1.8 | 1.9 |
| | Carbamation efficiency | (%) | 0.0 | 90.5 | 64.0 | 70.8 | 75.3 |

It seems that the time of about 60 minutes in carbamation is adequate to give a high nitrogen amount to CCA, which shows a good reaction efficiency for the carbamation reaction. Longer reaction times at higher temperatures only decrease reaction efficiencies.

### Brief description of the drawing

To enable a better understanding of the present invention, and to show how the same may be carried out into effect, reference will now be made, by way of example only, to the accompanying drawing, in which:

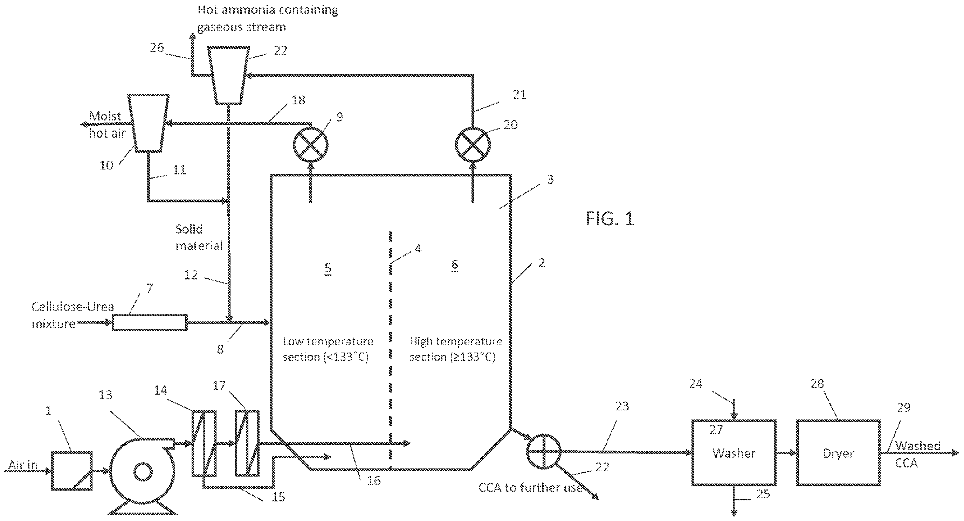

Figure 1 is a schematic view illustrating an exemplary system for practicing a process according to the invention.

Fig. 1 shows an embodiment, in which a fluidized bed dryer 2 is working at two temperatures and a fluidized bed drying chamber 3 is divided into two sections, typically by using an adjustable overflow plate 4. A low temperature (LT) section 5 is working at a temperature below 133°C, and a high temperature (HT) section 6 is working at a temperature of 133°C or over.

A mixture of cellulose and urea is fed by a feeder 7 through line 8 to the dryer 2. The mixture enters first the LT section 5. Hot gaseous drying medium, such as air, is introduced through an air filter 1 and fed by a blower 13 through an air heater 14 and line 15 to the LT section 5 so that a fluidized bed is formed. In the LT section residual moisture existing in the mixture is evaporated, and the temperature does not exceed the urea decomposition temperature. Moist air is led by a fan 9 through line 18 to a cyclone 10 which separates gaseous and solid fractions. The solid fraction is returned through lines 11, 12 and 8 to the fluidized bed drying chamber 3. The residence time in the LT section depends on the moisture amount of the mixture, but it is in a range of 10 - 90 minutes, preferably 20 - 70 minutes.

After the LT section 5, the mixture moves over the overflow plate 4 and enters the HT section 6, where the temperature level is higher than in the LT section. Hot gaseous drying medium, such as air, is introduced by the blower 13 through the air heaters 14 and 17 and line 16 to the HT section 6. The HT section is working at a temperature of 133°C or over. In the HT section the temperature is so high, that urea starts to decompose and CCA is produced. At the same time ammonia is formed and it is in gaseous form. The gaseous drying stream that flows through the solid cellulosic material, removes formed ammonia from the drying chamber 3 very efficiently. It is possible to attain high reaction efficiencies of over 80% by using the fluidized bed dryer as a carbamation reactor in the CCA manufacturing process. The ammonia-rich gas stream is led by a fan 20 through line 21 to a cyclone 22 which separates a small solid fraction and returns it to the drying chamber 3 through lines 12 and 8. The ammonia containing gaseous stream is discharged through line 26. The residence time in the HT section is 5 - 150 minutes, preferably 10 - 120 minutes, more preferably 20 - 100 minutes.

Ammonia from the ammonia containing gaseous stream of line 26 may be recovered and utilized at the pulp mill, e.g. recycled to the CCA production.

CCA produced in the fluidized bed dryer is discharged through line 22. It may go to packing, or it can be further used immediately after the dryer to produce regenerated cellulose products.

If the product needs washing after the fluidizing bed dryer processing, it is led through line 23 to a washing stage 27 having one or several washers. Washing liquid is led through line 24. The washer may be of any apparatus type suitable for CCA, e.g. a drum washer, a centrifuge, a disc filter, a drum filter, a filter press, a belt press, a twin wire press, a screw press, a wash press, or a belt washer. The next step may be a drying stage 28, if the CCA needs to be dried to a high dry content before further processing, transportation or use. The dryer type can be: a paddle dryer, a flash dryer, a fluidized bed dryer, a belt dryer, a drum dryer, a helix dryer, a plate dryer, or a spray dryer. Finally, CCA from line 29 is packed or further used.

Washing filtrate containing nitrogen compounds from line 25 may be utilized at the pulp mill.

## Claims

1. A process for producing cellulose carbamate (CCA), comprising the steps of:
a) providing a mixture including cellulose, liquid and urea, and
b) subjecting the mixture to drying and heating to carry out the carbamation reaction between cellulose and urea to produce cellulose carbamate and released ammonia in a fluidized bed, wherein the mixture is introduced into a fluidized bed drying chamber; a stream of hot gaseous medium is introduced into the chamber to effect fluidization of the mixture in order to dry and heat the mixture, whereafter a stream of gaseous medium containing ammonia and the produced cellulose carbamate are removed from the fluidized bed drying chamber.

2. A process according to claim 1, wherein the drying and heating of the mixture are effected simultaneously in the same bed in the fluidized bed dying chamber working at a temperature of 133 °C or over, which is maintained by means of the hot gaseous medium.

3. A process according to claim 1, wherein the drying and heating of the mixture are effected separately in the fluidized bed drying chamber which is divided into two sections, a drying section and a heating section, by arranging a partition within the chamber, and the drying section, where the mixture is first fed, is working at a temperature below 133 °C, and the heating section is working at a temperature of 133 °C or over.

4. A process according to claim 3, wherein a residence time in the drying section where residual water is evaporated from the mixture is 10-90 minutes, preferably 20 - 70 minutes.

5. A process according to claim 3 or 4, wherein a residence time in the heating section, where the carbamation reaction takes place, is 5 - 150 minutes, preferably 10 - 120 minutes, more preferably 20 - 100 minutes.

6. A process according to any of the preceding claims, wherein the cellulose carbamate removed from the fluidized bed drying chamber is directed to further use or it is optionally washed and dried.

7. A process according to any of the preceding claims, wherein the mixture in steps a) and b) is devoid of an auxiliary agent, such as an alkalizing or oxidative agent.

8. A process according to claim 3, 4 or 5, wherein the gas stream from the drying section and the gas stream from the heating section are removed from the drying chamber separately.

9. Use of a fluidized bed dryer as a carbamation reactor, in which cellulose and urea react to produce cellulose carbamate.

## Patentansprüche

1. Prozess zur Produktion von Cellulosecarbamat (CCA), umfassend die Schritte:
a) Bereitstellen einer Mischung, die Cellulose, Flüssigkeit und Harnstoff einschließt, und
b) Unterziehen der Mischung Trocknung und Erwärmung, um die Carbamatisierungsreaktion zwischen Cellulose und Harnstoff, um Cellulosecarbamat und freigesetztes Ammoniak zu produzieren, in einem Wirbelbett durchzuführen, wobei die Mischung in eine Wirbelbett-Trocknungskammer eingebracht wird; ein Strom aus heißem gasförmigem Medium in die Kammer eingebracht wird, um Verwirbelung der Mischung zu bewirken, um die Mischung zu trocknen und zu erwärmen, wonach ein Strom aus gasförmigem Medium, der Ammoniak und das hergestellte Cellulosecarbamat enthält, aus der Wirbelbett-Trocknungskammer entfernt wird.

2. Prozess nach Anspruch 1, wobei das Trocknen und Erwärmen der Mischung simultan in demselben Bett in der Wirbelbett-Trocknungskammer durchgeführt werden, die bei einer Temperatur von 133 °C oder darüber arbeitet, die mittels des heißen gasförmigen Mediums aufrechterhalten wird.

3. Prozess nach Anspruch 1, wobei die Trocknung und Erwärmung der Mischung separat in der Wirbelbett-Trocknungskammer bewirkt werden, die in zwei Abschnitte geteilt ist, einen Trocknungsabschnitt und einen Heizabschnitt, indem eine Trennwand innerhalb der Kammer angeordnet ist, und der Trocknungsabschnitt, in den die Mischung zuerst eingespeist wird, bei einer Temperatur unter 133 °C arbeitet, und der Heizabschnitt bei einer Temperatur von 133 °C oder darüber arbeitet.

4. Prozess nach Anspruch 3, wobei eine Verweilzeit in dem Trocknungsabschnitt, in dem restliches Wasser aus der Mischung verdampft wird, 10 bis 90 Minuten, vorzugsweise 20 bis 70 Minuten beträgt.

5. Prozess nach Anspruch 3 oder 4, wobei eine Verweilzeit in dem Heizabschnitt, in dem die Carbamatisierungsreaktion stattfindet, 5 bis 150 Minuten, vorzugsweise 10 bis 120 Minuten, bevorzugter 20 bis 100 Minuten beträgt.

6. Prozess nach einem der vorhergehenden Ansprüche, wobei das aus der Wirbelbett-Trocknungskammer entfernte Cellulosecarbamat zur weiteren Verwendung geführt wird oder gegebenenfalls gewaschen und getrocknet wird.

7. Prozess nach einem der vorhergehenden Ansprüche, wobei die Mischung in den Schritten a) und b) frei von Hilfsmittel, wie einem Alkalisierungsmittel oder Oxidationsmittel, ist.

8. Prozess nach Anspruch 3, 4 oder 5, wobei der Gasstrom aus dem Trocknungsabschnitt und der Gasstrom aus dem Heizabschnitt separat aus der Trocknungskammer entfernt werden.

9. Verwendung eines Wirbelbetttrockners als Carbamatisierungsreaktor, in dem Cellulose und Harnstoff reagieren, um Cellulosecarbamat zu produzieren.

## Revendications

1. Procédé pour la production d'un carbamate de cellulose (CCA), comprenant les étapes de :
a) fourniture d'un mélange comprenant une cellulose, un liquide et de l'urée, et
b) soumission du mélange à un séchage et un chauffage pour réaliser la réaction de carbamation entre la cellulose et l'urée pour produire un carbamate de cellulose et de l'ammoniac libéré dans un lit fluidisé, le mélange étant introduit dans un compartiment de séchage à lit fluidisé ; un flux de milieu gazeux chaud étant introduit dans le compartiment pour effectuer une fluidification du mélange afin de sécher et de chauffer le mélange, après quoi un flux de milieu gazeux contenant de l'ammoniac et le carbamate de cellulose produit sont éliminés du compartiment de séchage à lit fluidisé.

2. Procédé selon la revendication 1, le séchage et le chauffage du mélange étant effectués simultanément dans le même lit dans le compartiment de séchage à lit fluidisé fonctionnant à une température de 133 °C ou plus, qui est maintenue au moyen du milieu gazeux chaud.

3. Procédé selon la revendication 1, le séchage et le chauffage du mélange étant effectués séparément dans le compartiment de séchage à lit fluidisé qui est divisé en deux sections, une section de séchage et une section de chauffage, en agençant une partition à l'intérieur du compartiment, et la section de séchage, où le mélange est d'abord alimenté, fonctionnant à une température inférieure à 133 °C, et la section de chauffage fonctionnant à une température de 133 °C ou plus.

4. Procédé selon la revendication 3, un temps de séjour dans la section de séchage où de l'eau résiduelle est évaporée du mélange étant 10 à 90 minutes, préférablement 20 à 70 minutes.

5. Procédé selon la revendication 3 ou 4, un temps de séjour dans la section de chauffage, où la réaction de carbamation a lieu, étant 5 à 150 minutes, préférablement 10 à 120 minutes, plus préférablement 20 à 100 minutes.

6. Procédé selon l'une quelconque des revendications précédentes, le carbamate de cellulose éliminé du compartiment de séchage à lit fluidisé étant dirigé vers une autre utilisation ou étant éventuellement lavé et séché.

7. Procédé selon l'une quelconque des revendications précédentes, le mélange dans les étapes a) et b) étant dépourvu d'un agent auxiliaire, tel qu'un agent alcalinisant ou oxydant.

8. Procédé selon la revendication 3, 4 ou 5, le flux de gaz provenant de la section de séchage et le flux de gaz provenant de la section de chauffage étant éliminés du compartiment de séchage séparément.

9. Utilisation d'un séchoir à lit fluidisé comme réacteur de carbamation, dans lequel une cellulose et de l'urée réagissent pour produire un carbamate de cellulose.
